(19) Europäisches Patentamt / European Patent Office / Office européen des brevets

(11) **EP 2 689 045 B1**

(12) **FASCICULE DE BREVET EUROPEEN**

(45) Date de publication et mention de la délivrance du brevet:
**13.09.2017   Bulletin 2017/37**

(51) Int Cl.:
*C21D 8/04* *(2006.01)*          *C22C 38/02* *(2006.01)*
*C22C 38/04* *(2006.01)*          *C22C 38/12* *(2006.01)*
*C22C 38/14* *(2006.01)*          *C23C 2/06* *(2006.01)*
*C21D 9/46* *(2006.01)*          *C21D 8/02* *(2006.01)*
*C22C 38/00* *(2006.01)*          *C22C 38/06* *(2006.01)*
*C22C 38/26* *(2006.01)*          *C22C 38/28* *(2006.01)*
*C22C 38/42* *(2006.01)*          *C22C 38/50* *(2006.01)*
*C22C 38/58* *(2006.01)*          *C23C 2/02* *(2006.01)*
*C22C 38/38* *(2006.01)*

(21) Numéro de dépôt: **12714743.7**

(22) Date de dépôt: **23.03.2012**

(86) Numéro de dépôt international:
**PCT/FR2012/000104**

(87) Numéro de publication internationale:
**WO 2012/127136 (27.09.2012 Gazette 2012/39)**

(54) **TÔLE D'ACIER LAMINÉE À CHAUD ET PROCÉDÉ DE FABRICATION ASSOCIÉ**

WARMGEWALZTBLECH UND VERFAHRUNG ZUR HERSTELLUNG DIESES BLECH

HOT-ROLLED STEEL SHEET AND ASSOCIATED PRODUCTION METHOD

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**

(30) Priorité:  **24.03.2011   PCT/FR2011/000173**

(43) Date de publication de la demande:
**29.01.2014   Bulletin 2014/05**

(73) Titulaire: **ArcelorMittal**
**1160 Luxembourg (LU)**

(72) Inventeurs:
• **PERLADE, Astrid**
  **F-57050 Le Ban St Martin (FR)**
• **AMARD, Aurélie**
  **F-57100 Thionville (FR)**
• **PECHENOT, Florence**
  **F-57000 Metz (FR)**
• **STENBACK, Erik**
  **F-57000 Metz (FR)**
• **PIPARD, Jean Marc**
  **F-57130 Vaux (FR)**
• **HASSANI, Farid, E.**
  **Crown Point, IN 46307 (US)**

(74) Mandataire: **Lavoix**
**2, place d'Estienne d'Orves**
**75441 Paris Cedex 09 (FR)**

(56) Documents cités:
**EP-A2- 1 319 725     US-B1- 6 364 968**

**Description**

L'invention concerne principalement une tôle d'acier laminée à chaud.

L'invention concerne en outre des procédés permettant de fabriquer une telle tôle d'acier.

Le besoin d'allègement des véhicules automobiles et d'accroissement de la sécurité ont conduit à l'élaboration d'aciers à haute résistance.

On a historiquement commencé par développer des aciers comprenant des éléments d'addition de façon à obtenir principalement un durcissement par précipitation.

Puis, on a proposé des aciers « Dual Phase » qui comportent de la martensite au sein d'une matrice ferritique de façon à obtenir un durcissement structural.

Afin d'obtenir des niveaux de résistance supérieure combinés à une aptitude à la déformation, on a développé des aciers « TRIP » (Transformation Induced Plasticity) dont la microstructure est constituée d'une matrice ferritique comportant de la bainite et de l'austénite résiduelle qui, sous l'effet d'une déformation, par exemple lors d'une opération d'emboutissage, se transforme en martensite.

Enfin, pour atteindre une résistance mécanique supérieure à 800 MPa, des aciers multiphasés à structure majoritairement bainitique ont été proposés. Ces aciers sont utilisés dans l'industrie, et particulièrement dans l'industrie automobile, pour réaliser des pièces structurales.

Ce type d'acier est décrit dans la publication EP 2 020 451. Afin d'obtenir un allongement à rupture supérieur à 10% ainsi qu'une résistance mécanique supérieure à 800 MPa, les aciers décrits dans cette publication comportent, outre la présence connue de carbone, de manganèse et de silicium, du molybdène et du vanadium. La microstructure de ces aciers comprend essentiellement de la bainite supérieure (au moins 80%) ainsi que de la bainite inférieure, de la martensite et de l'austénite résiduelle.

Cependant, la fabrication de ces aciers est coûteuse du fait de la présence de molybdène et de vanadium.

L'invention vise donc à mettre à disposition une tôle dont les coûts de fabrication sont inférieurs à la tôle issue de la publication EP 2 020 451.

De plus, certaines pièces automobiles telles que les poutres de pare-choc et les bras de suspension, sont fabriquées par des opérations de mise en forme combinant différents modes de déformation. Certaines caractéristiques microstructurales de l'acier peuvent se révéler bien adaptées à un mode de déformation, mais peu favorables vis-à-vis d'un autre mode. Certaines parties des pièces doivent présenter une haute résistance à l'allongement, d'autres doivent présenter une bonne aptitude à la mise en forme d'un bord découpé.

Cette dernière propriété est évaluée de la façon suivante : après réalisation d'un trou par découpe dans une tôle, on utilise un outil tronconique de façon à réaliser une expansion au niveau des bords de ce trou. C'est au cours de cette opération que l'on peut observer un endommagement précoce au voisinage des bords du trou lors de l'expansion, cet endommagement s'amorçant sur des particules de seconde phase ou aux interfaces entre les différents constituants microstructuraux dans l'acier.

Décrite dans la norme ISO 16630 :2009, la méthode d'expansion de trou consiste à mesurer le diamètre initial Di du trou avant emboutissage, puis le diamètre final Df du trou après emboutissage, déterminé au moment où l'on observe des fissures traversantes dans l'épaisseur de la tôle sur les bords du trou. On détermine alors l'aptitude à l'expansion de trou Ac% selon la formule suivante : $Ac\% = 100 \ x \ \dfrac{(Df - Di)}{Di}$. Ac permet donc de quantifier l'aptitude d'une tôle à résister à un emboutissage au niveau d'un orifice découpé. Selon cette méthode, le diamètre initial est de 10 millimètres.

Dans ces conditions, l'invention vise à mettre à disposition une tôle d'acier dont le rapport d'expansion de trou Ac% est supérieur ou égal à 50% et ce, pour une gamme d'épaisseur susceptible d'être obtenue par un laminage à chaud, soit de 1,5 à 4 millimètres.

Par ailleurs, l'invention vise une tôle d'acier à l'état non revêtu, ou électrozingué ou galvanisé. La composition et les caractéristiques mécaniques de l'acier doivent être compatibles avec les contraintes et les cycles thermiques des procédés de revêtement de zinc au trempé en continu.

L'invention a également pour but de proposer un procédé de fabrication d'une tôle d'acier ne nécessitant pas d'efforts de laminage importants, ce qui permet d'en assurer la fabrication dans une large gamme d'épaisseur.

L'invention a également pour but de mettre à disposition une tôle d'acier peu sensible aux problèmes de retour élastique lors d'opérations d'emboutissage à froid. A cet effet, la limite d'élasticité Re ne doit pas être supérieure à 840 MPa. La limite d'élasticité ne doit pas être inférieure ou égale à 690 MPa pour satisfaire aux exigences d'allègement.

L'invention a également pour but de proposer une tôle d'acier aisément soudable par les procédés d'assemblage usuels.

Enfin, l'invention vise une tôle d'acier laminé à chaud de coût de fabrication économique, présentant conjointement une limite d'élasticité supérieure à 690 MPa et inférieure ou égale à 840 MPa, une résistance mécanique comprise entre 780 MPa et 950 MPa, un allongement à rupture supérieur à 10% et un rapport d'expansion de trou Ac% supérieur ou égal à 50%. On entend par limite d'élasticité supérieure à 690 MPa, une limite d'élasticité strictement supérieure à 690 MPa.

A cet effet, l'invention propose une tôle d'acier laminé à chaud dont la composition chimique comprend, les teneurs étant exprimées en poids :

$0,040\% \leq C \leq 0,065\%$
$1,4\% \leq Mn \leq 1,9\%$
$0,1\% \leq Si \leq 0,55\%$
$0,095\% \leq tri \leq 0,145\%$
$0,025\% \leq Nib \leq 0,045\%$
$0,005\% \leq Al \leq 0,1\%$
$0,002\% \leq N \leq 0,007\%$
$S \leq 0,004\%$
$P < 0,020$
optionnellement
$Cr \leq 0,7\%$
$Cu \leq 0,1\%$
$Ni \leq 0,25\%$
$B \leq 0,003\%$
$Ca \leq 0,005\%$
$Mg \leq 0,005\%$

le reste étant constitué de fer et d'impuretés inévitables provenant de l'élaboration,

dont la microstructure est constituée de bainite granulaire, de ferrite, de cémentite en pourcentage surfacique inférieur à 1,5%, et de carbonitrures de titane et de niobium, et

le rapport entre la taille de grain $D_L$ mesurée parallèlement à la direction de laminage et la taille de grain $D_N$ mesurée perpendiculairement à la direction de laminage est inférieur ou égal à 1,4.

La tôle de l'invention peut également comporter les caractéristiques optionnelles suivantes prises isolément ou en combinaison :

- le rapport entre la taille de grain $D_L$ mesurée parallèlement à la direction de laminage et la taille de grain $D_N$ mesurée perpendiculairement à la direction de laminage est inférieur ou égal à 1,3.
- selon un premier aspect de l'invention la composition chimique comprend, les teneurs étant exprimées en poids :

$0,045\% \leq C \leq 0,065\%$
$1,6\% \leq Mn \leq 1,9\%$
$0,1\% \leq Si \leq 0,55\%$
$0,095\% \leq Ti \leq 0,125\%$
$0,025\% \leq Nb \leq 0,045\%$
$0,01\% \leq Al \leq 0,1\%$
$0,002\% \leq N \leq 0,007\%$
$S \leq 0,004\%$
$P < 0,020$
optionnellement
$Cu \leq 0,1\%$
$Ni \leq 0,25\%$
$B \leq 0,003\%$
$Ca \leq 0,005\%$
$Mg \leq 0,005\%$

la dite composition ne comportant pas de chrome.

- selon le premier aspect de l'invention, la composition de l'acier comprend, les teneurs étant exprimées en poids:

$0,1\% \leq Si \leq 0,3\%$

- selon un second aspect de l'invention, la composition chimique comprend, les teneurs étant exprimées en poids :

0,040% ≤ C ≤ 0,065%
1,4% ≤ Mn ≤ 1,9%
0,1% ≤ Si ≤ 0,4%
0,095% ≤ Ti ≤ 0,145%
0,025%: ≤ Nb ≤ 0,045%
0,01% ≤ Al ≤ 0,1%
0,002% ≤ N ≤ 0,007%
0,2% ≤ Cr ≤ 0,7%
S ≤ 0,004%
P<0,020

optionnellement
Cu ≤ 0,1%
Ni≤ 0,25%
B≤0,003%
Ca ≤ 0,005%
Mg ≤ 0,005%

- lorsque la composition de l'acier comprend du chrome, les teneurs en chrome sont les suivantes : 0,4% ≤ Cr ≤ 0,6%

- le pourcentage surfacique de la bainite granulaire est compris entre 80% et 95% et en ce que le pourcentage surfacique de la ferrite est inférieur à 20%.
- la densité de nitrures de titane de taille moyenne supérieure à 6 micromètres est inférieure ou égal à 3/mm$^2$.
- la composition de l'acier comprend en teneur en poids :

0,0005% ≤ Ca ≤ 0,005%

- la composition de l'acier comprend en teneur en poids:

0,0005% ≤ Mg ≤ 0,005%

L'invention porte également sur un procédé de réalisation de la tôle précédemment énoncée.
Ce procédé est caractérisé en ce que l'on approvisionne sous forme de métal liquide un acier dont la composition comprend, les teneurs étant exprimées en poids :

0,040% ≤ C ≤ 0,065%
1,4% ≤ Mn ≤ 1,9%
0,1% ≤ Si ≤ 0,55%
0,095% ≤ Ti ≤ 0,145%
0,025% ≤ Nb ≤ 0,045%
0,005% ≤ Al ≤ 0,1%
0,002% ≤ N ≤ 0,007%
S ≤ 0,004%
P<0,020
optionnellement
Cr≤ 0,7%
Cu≤ 0,1%
Ni≤ 0,25%
B≤0,003%
Mg ≤ 0,005%

le reste étant constitué de fer et d'impuretés inévitables,
en ce qu'on effectue un traitement sous vide ou au SiCa, dans ce dernier cas, la composition comprend en outre, les teneurs étant exprimées en poids 0,0005% ≤ Ca ≤ 0,005%,
en ce que les quantités de titane [Ti] et d'azote [N] dissoutes dans le métal liquide satisfont à %[Ti] %[N] < 6.10$^{-4}$ %$^2$,
en ce qu'on coule l'acier pour obtenir un demi-produit coulé,
en ce qu'on réchauffe éventuellement le dit demi-produit à une température comprise entre 1160°C et 1300°C, puis

en ce qu'on lamine à chaud ledit demi-produit coulé avec une température de fin de laminage comprise entre 880°C et 930 °C, le taux de réduction de l'avant-dernière passe étant inférieur à 0,25, le taux de la dernière passe étant inférieur à 0,15, la somme des deux taux de réduction étant inférieure à 0,37, la température de début de laminage de l'avant dernière passe étant inférieure à 960 °C, de façon à obtenir un produit laminé à chaud, puis

en ce qu'on refroidit le dit produit laminé à chaud à une vitesse comprise entre 50 et 150 °C/s de façon à obtenir une tôle d'acier laminé à chaud,

et en ce qu'on bobine la dite tôle à une température comprise entre 470 et 625 °C.

Ce procédé peut également comporter, selon un premier aspect de l'invention, les caractéristiques optionnelles suivantes prises isolément ou en combinaison :

- la composition de l'acier comprend, les teneurs étant exprimées en poids :

    $0,045\% \leq C \leq 0,065\%$
    $1,6\% \leq Mn \leq 1,9\%$
    $0,1\% \leq Si \leq 0,3\%$
    $0,025\% \leq Nb \leq 0,045\%$
    $0,095\% \leq Ti \leq 0,125\%$
    $0,01\% \leq Al \leq 0,1\%$
    $0,002\% \leq N \leq 0,007\%$
    $S \leq 0,004\%$
    $P<0,020$
    optionnellement
    $Cu \leq 0,1\%$
    $Ni \leq 0,25\%$
    $B \leq 0,003\%$
    $Mg \leq 0,005\%$

la dite composition ne comportant pas de chrome

- dans le cas où la composition ne comporte pas de chrome, on bobine la tôle à une température comprise entre 515 et strictement 620 °C.
- on bobine la tôle à une température comprise entre 515 et 560 °C,

on décape la dite tôle, puis

on réchauffe la tôle décapée à une température comprise entre 600 et 750 °C, puis on refroidit la tôle décapée réchauffée à une vitesse comprise entre 5 et 20°C/s,

et on revêt de zinc la tôle obtenue dans un bain de zinc adapté.

Le procédé de l'invention peut également comporter, selon un second aspect de l'invention, les caractéristiques optionnelles suivantes prises isolément ou en combinaison :

- la composition de l'acier comprend, les teneurs étant exprimées en poids :

    $0,040\% \leq C \leq 0,065\%$
    $1,4\% \leq Mn \leq 1,9\%$
    $0,1\% \leq Si \leq 0,4\%$
    $0,095\% \leq Ti \leq 0,145\%$
    $0,025\% \leq Nb \leq 0,045\%$
    $0,005\% \leq Al \leq 0,1\%$
    $0,002\% \leq N \leq 0,007\%$
    $0,2\% \leq Cr \leq 0,7\%$
    $S \leq 0,004\%$
    $P<0,020$
    optionnellement
    $Cu \leq 0,1\%$
    $Ni \leq 0,25\%$
    $B \leq 0,003\%$
    $Ca \leq 0,005\%$
    $Mg \leq 0,005\%$

et on bobine la dite tôle à une température comprise entre 470 et 580 °C

- la composition de l'acier comprend, les teneurs étant exprimées en poids:

    0,4% ≤ Cr ≤ 0,6%

- lorsque la somme des teneurs en Mn, Si et Cr est inférieure à 2,35%, on bobine la tôle à une température comprise entre 520°C et 580 °C,

D'autres caractéristiques et avantages de l'invention apparaîtront au cours de la description ci-dessous, donnée à titre d'exemple et faite en référence à la figure unique annexée sur laquelle est représentée l'évolution du rapport d'expansion de trou Ac% en fonction du caractère équiaxe des grains, celui-ci étant observé sur une surface polie et attaquée.

Selon l'invention, la teneur en poids en carbone est comprise entre 0,040% et 0,065 %. Cette gamme de teneur en carbone permet d'obtenir simultanément un allongement à rupture élevé et une résistance mécanique supérieure à 780 MPa. Pour une teneur en carbone plus élevée, en particulier au-delà de 0,095%, l'aptitude au soudage tend à diminuer (Tableau 1).

Par ailleurs, la teneur maximale en poids en carbone est fixée à 0,065% ce qui permet d'assurer la transformation complète d'austénite en bainite granulaire et évite ainsi la formation de martensite et d'austénite et la formation conjuguée de secondes phases dures limitant l'aptitude à l'expansion de trou. Cette teneur maximale permet donc d'obtenir un rapport d'expansion de trou Ac% supérieur ou égal à 50%.

Selon l'invention, la teneur en poids en manganèse est comprise entre 1,4% et 1,9 %. Présent en telle quantité, le manganèse participe à la résistance de la tôle et limite la formation d'une bande de ségrégation centrale. Il contribue à obtenir un rapport d'expansion de trou Ac% supérieur ou égal à 50%.

Une teneur en poids en aluminium comprise entre 0,005% et 0,1% permet d'assurer la désoxydation de l'acier pendant sa fabrication.

Selon l'invention, la composition chimique de la tôle d'acier laminée à chaud comporte également du titane et du niobium. Ces deux éléments confèrent notamment à la tôle la résistance visée, le durcissement nécessaire et le rapport d'expansion de trou Ac% visé. Ces deux éléments confèrent chacun à la tôle des propriétés spécifiques de résistance, de durcissement et de rapport d'expansion de trou. Il a été découvert dans le cadre de la présente invention que ces deux éléments devaient être présents dans la composition de l'acier dans des teneurs spécifiques.

Le titane est plus particulièrement présent dans l'acier en quantité comprise entre 0,095% et 0,145% en poids. En deçà de 0,095 %, la résistance mécanique de 780 MPa n'est pas atteinte et au-delà de 0,145%, il existe des risques de précipitation des nitrures de titane grossiers qui peuvent conduire à un endommagement précoce lors de l'expansion de trou. En effet, lorsque des nitrures de taille supérieure à 6 microns sont présents, on constate que ceux-ci sont majoritairement à l'origine des décohésions avec la matrice lors des étapes de découpe et d'emboutissage.

En outre, il est prévu que la teneur en poids de l'azote soit comprise entre 0,002% et 0,007%. L'azote doit être inférieur à 0,007% dans le but d'éviter une précipitation précoce de nitrures dans le métal liquide. Quoique la teneur en azote puisse être extrêmement basse, on fixe sa valeur limite à 0,002% de façon à ce que la fabrication puisse être réalisée dans des conditions économiquement satisfaisantes.

Concernant le niobium, sa teneur en poids dans la composition de l'acier est comprise entre 0,025% et 0,045% et de préférence entre 0,025% et 0,035%. En teneur massique supérieure à 0,025%, le niobium durcit efficacement par la formation de carbonitrures très fins. Cependant, au delà d'une teneur en poids de 0,045 %, la recristallisation de l'austénite est retardée. La structure contient alors une fraction significative de grains allongés, ce qui ne permet plus d'atteindre le rapport d'expansion de trou Ac% visé.

L'addition conjointe de titane et de niobium dans les proportions spécifiques indiquées ci-dessus, permet d'atteindre des propriétés de durcissement et d'aptitude à l'expansion de trou optimales.

Ainsi, l'acier selon l'invention ne comporte pas d'addition coûteuse de molybdène.

A titre optionnel, la composition peut comporter du chrome en quantité inférieure ou égale à 0,7%, de façon à améliorer la qualité de surface, tout particulièrement dans une teneur comprise entre 0,4 et 0,6%. Selon un aspect de l'invention, sa présence n'est cependant pas absolument nécessaire, ce qui présente l'avantage d'éviter des additions coûteuses. Selon un autre aspect de l'invention, l'addition de chrome en quantité comprise entre 0,2 et 0,7%, de préférence entre 0,4 et 0,6%, permet de bobiner à plus basses températures, comme il sera détaillé plus loin.

La composition peut également comprendre la présence optionnelle de cuivre en quantité comprise jusqu'à 0,1%, et/ou de nickel en quantité comprise jusqu'à 0,25%.

Dans le but d'améliorer la qualité de surface, la composition peut également comporter à titre optionnel du bore en quantité inférieure ou égale à 0,003%, et préférentiellement entre 0,0015 et 0,0025%.

Selon l'invention, le silicium est présent dans la composition chimique de la tôle, selon une teneur en poids comprise entre 0,1% et 0,55%.

**EP 2 689 045 B1**

Le silicium retarde la précipitation de la cémentite. Dans les quantités définies selon l'invention, celle-ci précipite en quantité très faible, c'est-à-dire en teneur surfacique inférieure à 1,5% et sous une forme très fine. Cette morphologie plus fine de la cémentite permet d'obtenir une aptitude à l'expansion de trou élevée, supérieure ou égale à 50%.

La teneur en soufre de l'acier selon l'invention est inférieure à 0,004% dans le but de limiter la formation de sulfures, notamment de sulfures de manganèse.

Les faibles teneurs en soufre et en azote présents dans la composition de la tôle favorisent l'aptitude à l'expansion de trou.

La teneur en phosphore de l'acier selon l'invention est inférieure à 0,020% dans le but de favoriser l'aptitude à l'expansion de trou et la soudabilité.

On peut par ailleurs prévoir que la composition de l'acier inclut la présence de calcium pour une teneur en poids inférieure ou égale à 0,005%, de préférence comprise entre 0,0005% et 0,005% et/ou la présence de magnésium pour une teneur en poids inférieure ou égale à 0,005%, de préférence comprise entre 0,0005 et 0,005%.

Ces deux éléments permettent de former de fins oxydes ou oxysulfures de calcium et de magnésium. Ceux-ci servent de germes à une précipitation ultérieure très fine de nitrures/carbonitrures de titane. La réduction de la taille des carbonitrures permet alors d'obtenir une meilleure aptitude à l'expansion de trou. La microstructure de la tôle de l'invention comporte de la bainite granulaire.

La bainite granulaire se distingue de la bainite supérieure et inférieure. On se réfère à l'Article Characterisation and Quantification of Complex Bainitic Microstructures in High and Ultra-High Strength Steels - Materials Science Forum Vol 500-501, pp 387-394 ; Nov2005 pour la définition de la bainite granulaire.

En accord avec cet article, on définit la bainite granulaire composant la microstructure de la tôle de l'invention comme présentant une proportion importante de grains adjacents fortement désorientés et une morphologie irrégulière des grains.

Selon l'invention, la cémentite est présente en faible quantité, limitée par une fraction surfacique n'excédant pas 1,5%. L'endommagement intervenant entre la matrice bainitique et la cémentite nettement plus dure, est ainsi limité. Cette faible teneur en cémentite provient notamment de l'ajout de silicium utilisé et permet d'obtenir une tôle d'acier avec un rapport d'expansion de trou Ac% supérieur ou égal à 50%.

La tôle peut contenir jusqu'à 20% de ferrite en pourcentage surfacique.

Enfin, selon l'invention, la tôle contient également des carbonitrures de titane et de niobium.

La tôle de l'invention est exempte de martensite et d'austénite, ce qui permet d'éviter la présence de secondes phases dures qui auraient pour effet de limiter le rapport d'expansion de trou Ac%. La microstructure de la tôle de l'invention est principalement constituée de bainite granulaire et éventuellement de ferrite et de cémentite dans des proportions déterminées et indiquées plus haut. Le durcissement de la tôle est obtenu par précipitation et on constate l'absence de secondes phases dures évoquées précédemment.

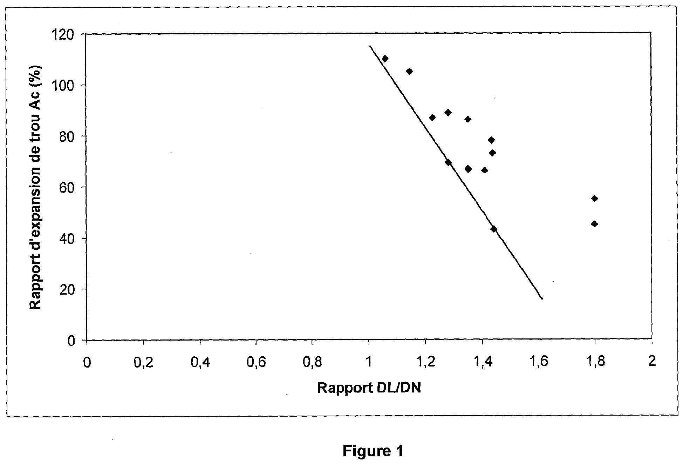

On se réfère à la figure 1 qui illustre la relation entre le rapport entre la taille de grain $D_L$ mesurée parallèlement à la direction de laminage et la taille de grain $D_N$ mesurée perpendiculairement à la direction de laminage, et le rapport d'expansion de trou Ac.

Le rapport $D_L/D_N$ est déterminé de la façon suivante : on observe la microstructure, sur coupe polie et attaquée au moyen d'un réactif connu en lui-même, par microscopie optique à des grandissements allant de 500 à 1500x environ sur une surface qui comporte une population de grains statistiquement représentative. On détermine au moyen d'un logiciel d'analyse d'images connu en lui-même, tel que par exemple par cartographie EBSD (Electron Back Scattered Diffraction), les tailles moyennes de grains mesurées parallèlement ($D_L$) et perpendiculairement ($D_N$) à la direction de laminage. Le rapport $D_L/D_N$ caractérise donc l'allongement moyen des grains dans le sens du laminage, autrement appelé le caractère équiaxe.

Comme il est présenté à la figure 1, les inventeurs ont mis en évidence qu'il existe un rapport entre le coefficient d'expansion de trou Ac% et le rapport $D_L/D_N$. La droite portée à la figure 1 indique l'enveloppe inférieure des résultats expérimentaux et permet de déterminer, à niveau d'expansion de trou donné, la valeur du rapport $D_L/D_N$ qu'il convient de ne pas excéder, pour atteindre ce niveau donné. On met ainsi en évidence que pour obtenir un coefficient Ac supérieur ou égal à 50%, le rapport $D_L/D_N$ doit être inférieur ou égal à 1,4, ce qui signifie que les grains doivent être relativement équiaxes. Pour obtenir un rapport d'expansion de trou Ac% supérieur à 65 ou à 100%, le rapport $D_L/D_N$ doit être respectivement inférieur ou égal à 1,3 ou 1,1.

Par ailleurs, le pourcentage surfacique de la bainite granulaire est compris entre 80% et 95% et le pourcentage surfacique de la ferrite est inférieur à 20%.

Afin d'obtenir une teneur surfacique en cémentite inférieure à 1,5%, la teneur en silicium est comprise entre 0,1 et 0,55% en poids.

Les Tableaux 1,2A,2B et 2C ci-dessous montrent l'influence de la composition chimique et des conditions de fabrication d'une tôle d'acier laminé à chaud sur la microstructure et la résistance mécanique, l'allongement à rupture, le rapport d'expansion de trou Ac% et le rapport $D_L/D_N$.

Toutes ces compositions d'acier ont une teneur en phosphore inférieure à 0,020% en poids.

7

Ces tableaux donnent également des informations sur le coût de fabrication de la tôle, sur la facilité de fabriquer des tôles laminées à chaud dans une gamme d'épaisseur allant de 1,5 à 4 millimètres, ainsi que sur la soudabilité.

Les températures de bobinage des tôles d'acier laminées à chaud et refroidies sont indiquées pour tous les exemples présentés dans ces tableaux ainsi que pour certains contre exemples.

Ces tableaux indiquent également la présence plus ou moins importante de composés « M-A », c'est à dire « Martensite-Austénite résiduelle ». En raison de leur dureté intrinsèque (martensite) ou de leur aptitude à former de la martensite sous l'influence d'une déformation (austénite résiduelle), la présence de ces composés qui associent en proportion variable de la martensite et de l'austénite résiduelle, est néfaste pour l'obtention de valeurs élevées de rapports d'expansion de trou.

Toutes les compositions et les conditions d'élaboration des tôles selon l'invention sont telles que la densité de TiN de taille moyenne supérieure à 6 micromètres, est inférieure ou égale à 3/mm$^2$.

Le Tableau 1 concerne spécifiquement des exemples dans lesquelles la composition de l'acier ne comporte pas de chrome.

Le contre exemple 1 correspond à une tôle de la publication EP 2 020 451. Dans cette tôle, comme expliqué plus haut, la présence de vanadium et de molybdène engendre des coûts trop importants.

Le contre exemple 2 montre qu'en l'absence de molybdène et en présence de vanadium, la tôle obtenue présente une résistance maximale en traction trop basse.

Cette résistance maximale en traction Rm peut être augmentée par ajout de carbone et de niobium (contre exemple 3), mais dans ce cas, le rapport d'expansion de trou est insuffisant.

Dans le contre-exemple 4, une teneur en niobium de 0,03% et une faible teneur en titane engendre une fois encore une résistance maximale en traction trop basse.

Les contre-exemples 2, 3 et 4 présentent en outre une présence trop importante de composés M-A précédemment définis.

Dans les contre-exemples 5 et 6, les teneurs en niobium et en titane sont élevées. On observe qu'avec (contre-exemple 5) ou sans (contre-exemple 6) molybdène, le rapport d'expansion de trou est insuffisant et le rapport $D_L/D_N$ est trop élevé. En outre, pour le contre-exemple 5, des teneurs élevées en niobium et en molybdène engendrent des problèmes de faisabilité dimensionnelle.

Enfin, le contre-exemple 7 diffère du contre-exemple 3 en ce que la composition ne comporte pas de vanadium et comporte une teneur élevée en carbone. On constate dans ce cas une soudabilité insuffisante, une proportion néfaste de composés « M-A », ainsi qu'une limite d'élasticité et un rapport d'expansion de trou insuffisants.

Les exemples 1 à 3 entrent dans le cadre de l'invention pour une teneur en silicium comprise entre 0,1 % et 0,55%.

En raison de l'absence d'éléments durcissants (Mo notamment) et de la teneur limitée en niobium, les aciers selon l'invention permettent une fabrication aisée par laminage à chaud dans une large gamme d'épaisseur.

Les Tableaux 2A,2B et 2C concernent spécifiquement des compositions comportant du chrome dans des teneurs comprises entre 0,2 et 0,7%.

Les températures de bobinage des tôles d'acier laminées à chaud et refroidies sont de 500°C et 550°C.

Dans les contre exemples A et B, la teneur en manganèse est de 1,296%. Pour ces deux contre exemples, on constate que quelle que soit la température de bobinage de 500°C ou de 550°C, la tôle ne présente pas les propriétés requises, notamment en terme de résistance maximale à la traction.

Dans les contres exemples C et D, la teneur en silicium est de 0,6%. Pour ces deux contre exemples, on constate que quelle que soit la température de bobinage de 500°C ou de 550°C, la tôle ne présente pas les propriétés requises, notamment en raison de la présence de nombreux composés « M-A »

Les autres résultats présentés dans les Tableaux 2A,2B et 2C sont classés selon la somme croissante des teneurs additionnées en manganèse, silicium et chrome.

Des tests réalisés avec une composition entrant dans le cadre de l'invention pour une somme des teneurs en Mn, Si et Cr inférieure à 2,35 et une température de bobinage de 500°C ont conduit à des résultats insatisfaisants, notamment en terme de résistance maximale en traction.

Lorsque la somme des teneurs en Mn, Si et Cr est supérieure à 2,35, les propriétés de la tôle obtenue sont satisfaisantes quelque soit la température de bobinage de 500°C ou de 550°C.

**TABLEAU 1**

| | Composition chimique (en %) | | | | | | | | | | |
|---|---|---|---|---|---|---|---|---|---|---|---|
| | C | Mn | Si | Al | S | Cr | Mo | Nb | Ti | V | N |
| Contre Exemple 1 | **0,076** | 1,661 | 0,22 | 0,03 | 0,003 | 0,408 | **0,307** | - | - | **0,154** | 0,007 |
| Contre Exemple 2 | **0,095** | **2,054** | 0,21 | 0,035 | 0,002 | 0,399 | - | - | - | **0,162** | 0,003 |
| Contre Exemple 3 | **0,125** | **2,067** | 0,204 | 0,038 | 0,001 | 0,402 | - | 0,031 | - | **0,164** | 0,004 |
| Contre Exemple 4 | 0,06 | **2,011** | 0,502 | 0,04 | 0,002 | 0,514 | - | 0,03 | **0,023** | **-** | 0,004 |
| Contre Exemple 5 | 0,05 | 1,66 | 0,227 | 0,035 | 0,003 | - | **0,145** | **0,067** | **0,09** | - | 0,006 |
| Contre Exemple 6 | 0,057 | 1,626 | 0,206 | 0,033 | 0,002 | - | - | **0,069** | **0,086** | - | 0,005 |
| Contre Exemple 7 | **0,095** | **1,943** | 0,482 | 0,04 | 0,002 | 0,505 | - | 0,028 | 0,021 | - | 0,005 |
| Exemple 1 * | 0,05 | 1,7 | 0,2 | 0,033 | 0,002 | - | - | 0,04 | 0,105 | - | 0,005 |
| Exemple 2 ** | 0,049 | 1,64 | 0,215 | 0,032 | 0,003 | - | - | 0,041 | 0.112 | - | 0,004 |
| Exemple 3 *** | 0,064 | 1,778 | 0,521 | 0,05 | 0,001 | - | - | 0,031 | 0,104 | - | 0,006 |

(suite)

| | Coût analytique | Faisabilité épaisseur | Soudabilité | Fraction d'îlots MA | Limite d'élasticité Re (Mpa) | Résistance maximale en traction Rm (Mpa) | Allongement total à rupture | Expansion de trou (Méthode ISO) | Rapport d'allongement des grains DN/DL | |
|---|---|---|---|---|---|---|---|---|---|---|
| Contre Exemple 1 | ● | ○ | ○ | ○ | 760 | 867 | 10 | 64 | ND | |
| Contre Exemple 2 | ◉ | ○ | ◉ | ◉ | **690** | **750** | 13,4 | ND | ND | • Mauvais |
| Contre Exemple 3 | ◉ | ○ | ◉ | ● | 765 | 847 | 16,6 | **33,3** | ND | ◉ Moyen |
| Contre Exemple 4 | ○ | ○ | ○ | ◉ | **674** | **730** | 18,1 | ND | ND | ○ Bon |
| Contre Exemple 5 | ● | ● | ○ | ○ | 836 | 878 | 13,4 | **45** | **1,8** | ND Non Déterminé |
| Contre Exemple 6 | ○ | ◉ | ○ | ○ | 813,5 | 820 | 13,5 | **43,1** | **1,44** | |
| Contre Exemple 7 | ○ | ○ | ◉ | ● | **668** | **966** | 12,8 | **21,8** | ND | |
| Exemple 1 * | ○ | ○ | ○ | ○ | 816,5 | 821 | 14,8 | 66,5 | 1,35 | * Tbobinage : 590 °C |
| Exemple 2 ** | ○ | ○ | ○ | ○ | 818 | 824 | 14,4 | 78 | ND | ** Tbobinage : 500 °C |
| Exemple 3 *** | ○ | ○ | ○ | ○ | 776 | 864 | 16,8 | 53 | ND | *** T bobinage : 578 °C |

**TABLEAU 2A**

| | Composition chimique (en %) | | | | | | | | | |
|---|---|---|---|---|---|---|---|---|---|---|
| | C | Mn | Si | Al | S | Cr | Nb | Ti | N | Mn+Si+Cr |
| Contre exemple A * | 0,049 | **1,296** | 0,209 | 0,03 | <0,001 | 0,616 | 0,033 | 0,102 | 0,004 | - |
| Contre exemple B ** | 0,049 | **1.296** | 0,209 | 0,03 | <0,001 | 0,616 | 0,033 | 0,102 | 0,004 | - |
| Contre exemple C * | 0,055 | 1,6 | **0,6** | 0,045 | <0,001 | 0,6 | 0,03 | 0,125 | 0,004 | - |
| Contre exemple D ** | 0,055 | 1,6 | **0,6** | 0,045 | <0,001 | 0,6 | 0,03 | 0,125 | 0,004 | - |
| Exemple 1 * | 0,048 | 1,492 | 0,206 | 0,031 | <0,001 | 0,612 | 0,031 | 0,1 | 0,004 | 2,31 |
| Exemple 2 * | 0,048 | 1,501 | 0,207 | 0,031 | <0,001 | 0,614 | 0,032 | 0,1 | 0,005 | 2,322 |
| Exemple 3** | 0,056 | 1,78 | 0,207 | 0,038 | 0,002 | 0,405 | 0,03 | 0,108 | 0,005 | 2,392 |
| Exemple 4* | 0,045 | 1,78 | 0,4 | 0,038 | 0,002 | 0,22 | 0,03 | 0,122 | 0,004 | 2,4 |
| Exemple 5 ** | 0,045 | 1,78 | 0,4 | 0,038 | 0,002 | 0,22 | 0,03 | 0,122 | 0,004 | 2,4 |
| | Coût analytique | Faisabilité épaisseur | Soudabilité | Fraction d'îlots M-A | Limite d'élasticité Re (Mpa) | Résistance maximale en traction Rm (Mpa) | Allongement total à rupture | Expansion de trou (Méthode ISO) | | |
| Contre exemple A * | ○ | ○ | ○ | ○ | 725 | **770** | **8** | 72 | | |
| Contre exemple B ** | ○ | ○ | ○ | ○ | 725 | **769** | 16,3 | 100 | ● | Mauvais |
| Contre exemple C * | ○ | ○ | ○ | ◉ | **856** | 897 | 17,2 | **41** | ◦ | Moyen |

(suite)

| | Coût analytique | Faisabilité épaisseur | Soudabilité | Fraction d'îlots M-A | Limite d'élasticité Re (Mpa) | Résistance maximale en traction Rm (Mpa) | Allongement total à rupture | Expansion de trou (Méthode ISO) | | |
|---|---|---|---|---|---|---|---|---|---|---|
| Contre exemple D ** | ○ | ○ | ○ | ◉ | 789 | 848 | 16,3 | 55 | ○ | Bon |
| Exemple 1 * | ○ | ○ | ○ | ○ | 800 | 823 | 16,3 | 57 | ND | Non Déterminé |
| Exemple 2 * | ○ | ○ | ○ | ○ | 760 | 863 | 16,3 | 55 | | |
| Exemple 3 ** | ○ | ○ | ○ | ○ | 751 | 796 | 16,1 | 58 | *Tbobinage : 550°C | |
| Exemple 4 * | ○ | ○ | ○ | ○ | 776 | 820 | 16,8 | 67 | **Tbobinage : 500 °C | |
| Exemple 5 ** | ○ | ○ | ○ | ○ | 753 | 786 | 15,4 | 72 | | |

**TABLEAU 2B**

| | Composition chimique (en %) | | | | | | | | | |
|---|---|---|---|---|---|---|---|---|---|---|
| | C | Mn | Si | Al | S | Cr | Nb | Ti | N | Mn+Si+Cr |
| Exemple 6* | 0,043 | 1,77 | 0,4 | 0,038 | 0,02 | 0,293 | 0,03 | 0,121 | 0,004 | 2,463 |
| Exemple 7** | 0,043 | 1,77 | 0,4 | 0,038 | 0,02 | 0,293 | 0,03 | 0,121 | 0,004 | 2,463 |
| Exemple 8* | 0,054 | 1,68 | 0,2 | 0,025 | 0,002 | 0,628 | 0,032 | 0,107 | 0,005 | 2,508 |
| Exemple 9** | 0,054 | 1,68 | 0,2 | 0,025 | 0,002 | 0,628 | 0,032 | 0,107 | 0,005 | 2,508 |
| Exemple 10** | 0,057 | 1,77 | 0,345 | 0,036 | 0,002 | 0,404 | 0,03 | 0,108 | 0,005 | 2,519 |
| Exemple 11* | 0,055 | 1,77 | 0,347 | 0,033 | 0,002 | 0,404 | 0,03 | 0,108 | 0,005 | 2,521 |
| Exemple 12* | 0,045 | 1,69 | 0,208 | 0,041 | <0,003 | 0,63 | 0,03 | 0,12 | 0,005 | 2,528 |
| Exemple 13** | 0,045 | 1,69 | 0,208 | 0,041 | <0,003 | 0,63 | 0,03 | 0,12 | 0,005 | 2,528 |
| | Coût asnalitique | Faisabilité épaisseur | Soudabilité | Fraction d'îlots M-A | Limite d'élasticité Re (Mpa) | Résistance maximale en traction Rm (Mpa) | Allongement total à rupture | Expansion de trou (Méthode ISO) | | |
| Exemple 6* | ○ | ○ | ○ | ○ | 783 | 829 | 16,8 | 67 | | |
| Exemple 7** | ○ | ○ | ○ | ○ | 739 | 783 | 14,9 | 58 | ● | Mauvais |
| Exemple 8* | ○ | ○ | ○ | ○ | 764 | 827 | 17,7 | 51 | ◐ | Moyen |
| Exemple 9** | ○ | ○ | ○ | ○ | 741 | 794 | 13,8 | 87 | ○ | Bon |
| Exemple 10** | ○ | ○ | ○ | ○ | 762 | 809 | 14,6 | 64 | ND | Non Déterminé |

13

(suite)

| | Coût asnalitique | Faisabilité épaisseur | Soudabilité | Fraction d'îlots M-A | Limite d'élasticité Re (Mpa) | Résistance maximale en traction Rm (Mpa) | Allongement total à rupture | Expansion de trou (Méthode ISO) | |
|---|---|---|---|---|---|---|---|---|---|
| Exemple 11* | ○ | ○ | ○ | ○ | ND | 825 | 15 | 53 | |
| Exemple 12* | ○ | ○ | ○ | ○ | 785 | 826 | 16,6 | 72 | *Tbobinage : 550 °C |
| Exemple 13** | ○ | ○ | ○ | ○ | 741 | 793 | 15,2 | 82 | **Tbobinage : 500 °C |

**TABLEAU 2C**

| | Composition chimique (en %) | | | | | | | | | |
|---|---|---|---|---|---|---|---|---|---|---|
| | C | Mn | Si | Al | S | Cr | Nb | Ti | N | Mn+Si+Cr |
| Exemple 14* | 0,045 | 1,76 | 0,4 | 0,035 | 0,002 | 0,393 | 0,03 | 0,12 | 0,004 | 2,553 |
| Exemple 15** | 0,045 | 1,76 | 0,4 | 0,035 | 0,002 | 0,393 | 0,03 | 0,12 | 0,004 | 2,553 |
| Exemple 1** | 0,055 | 1,6 | 0,4 | 0,045 | <0,001 | 0,6 | 0,03 | 0,125 | 0,004 | 2,6 |
| Exemple 17* | 0,045 | 1,696 | 0,293 | 0,039 | <0,003 | 0,63 | 0,03 | 0,121 | 0,005 | 2,619 |
| Exemple 18** | 0,045 | 1,696 | 0,293 | 0,039 | <0,003 | 0,63 | 0,03 | 0,121 | 0,005 | 2,619 |
| Exemple 19** | 0,053 | 1,8 | 0,199 | 0,022 | 0,002 | 0,626 | 0,032 | 0,105 | 0,006 | 2,625 |
| Exemple 20** | 0,053 | 1,8 | 0,344 | 0,022 | 0,002 | 0,627 | 0,032 | 0,106 | 0,006 | 2,771 |

| | Coût analytique | Faisabilité épaisseur | Soudabilité | Fraction d'îlots M-A | Limite d'élasticité Re (Mpa) | Résistance maximale en traction Rm (Mpa) | Allongement total à rupture | Expansion de trou (Méthode ISO) | | |
|---|---|---|---|---|---|---|---|---|---|---|
| Exemple 14* | ○ | ○ | ○ | ○ | 786 | 838 | 15,5 | 75 | | |
| Exemple 15 ** | ○ | ○ | ○ | ○ | 754 | 799 | 14 | 69 | ● | Mauvais |
| Exemple 16** | ○ | ○ | ○ | ○ | 803 | 840 | 15,5 | 72 | ◔ | Moyen |
| Exemple 17* | ○ | ○ | ○ | ○ | 824 | 864 | 14,2 | 62 | ○ | Bon |
| Exemple 18** | ○ | ○ | ○ | ○ | 768 | 811 | 15 | 71 | ND | Non Déterminé |
| Exemple 19** | ○ | ○ | ○ | ○ | 741 | 811 | 15,9 | 68 | *Tbobinage: 550 °C | |

Le procédé de fabrication d'une tôle d'acier précédemment définie et comportant une teneur en poids en silicium comprise entre 0,1% et 0,55% comprend les étapes suivantes :

On approvisionne sous forme de métal liquide un acier dont la composition comprend, les teneurs étant exprimées en poids:

$0,040\% \leq C \leq 0,065\%$
$1,4\% \leq Mn \leq 1,9\%$
$0,1\% \leq Si \leq 0,55\%$
$0,095\% \leq Ti \leq 0,145\%$
$0,025\% \leq Nb \leq 0,045\%$
$0,01\% \leq Al \leq 0,1\%$
$0,002\% \leq N \leq 0,007\%$
$S \leq 0,004\%$,
$P < 0,020\%$ et optionnellement :

$Cr \leq 0,7\%$
$Cu \leq 0,1\%$
$Ni \leq 0,25\%$
$B \leq 0,003\%$
$Mg \leq 0,005\%$,

le reste étant constitué de fer et d'impuretés inévitables.

Dans le métal liquide contenant une teneur en azote [N] dissous, on ajoute le titane [Ti] de façon que les quantités de titane [Ti] et d'azote [N] dissoutes dans le métal liquide satisfassent à %[Ti] %[N] < $6.10^{-4}$ %$^2$.

On effectue sur le métal liquide soit un traitement sous vide, soit un traitement au silico- calcium (SiCa), auquel cas il sera prévu que la composition comprend en outre en teneur en poids en calcium telle que $0,0005\% \leq Ca \leq 0,005\%$,

Dans ces conditions, les nitrures de titane ne précipitent pas précocement sous forme grossière dans le métal liquide, ce qui aurait pour effet de réduire l'aptitude à l'expansion de trou. La précipitation du titane intervient à plus basse température sous forme de carbonitrures fins répartis uniformément. Cette précipitation fine contribue au durcissement et à l'affinement de la microstructure.

Puis on coule l'acier pour obtenir un demi-produit coulé. Ceci peut se faire préférentiellement par coulée continue. Très préférentiellement, la coulée peut être réalisée entre cylindres contra-rotatifs pour obtenir un demi-produit coulé sous forme de brames minces ou de bandes minces. En effet, ces modes de coulée conduisent à une diminution de la taille des précipités, favorables à l'expansion de trou sur le produit obtenu à l'état final.

Le demi-produit obtenu est ensuite réchauffé à une température comprise entre 1160 et 1300°C. En deçà de 1160 °C, la résistance mécanique en traction visée de 780 MPa n'est pas atteinte. Naturellement, dans le cas d'une coulée directe de brames minces, l'étape de laminage à chaud des demi produits débutant à plus de 1160°C peut se faire directement après coulée, c'est à dire sans refroidissement du demi produit jusqu'à température ambiante, et donc sans qu'il ne soit nécessaire d'effectuer une étape de réchauffage. Puis, on lamine à chaud ledit demi-produit coulé avec une température de fin de laminage comprise entre 880 et 930 °C, le taux de réduction de l'avant dernière passe étant inférieure à 0,25, le taux de la dernière passe étant inférieure à 0,15, la somme des deux taux de réduction étant inférieure à 0,37, la température de début de laminage de l'avant dernière passe étant inférieure à 960 °C, de façon à obtenir un produit laminé à chaud.

On lamine donc au cours des deux dernières passes à une température inférieure à la température de non recristallisation, ce qui empêche la recristallisation de l'austénite. On vise ainsi à ne pas provoquer une déformation excessive de l'austénite lors de ces deux dernières passes.

Ces conditions permettent de créer un grain le plus équiaxe possible afin de satisfaire les exigences relatives au rapport d'expansion de trou Ac%.

Après laminage, on refroidit le produit laminé à chaud à une vitesse comprise entre 50 et 150 °C/s de façon à obtenir une tôle d'acier laminé à chaud. Ce mode de refroidissement est dit « direct », c'est-à-dire qu'il est réalisé en une seule étape sans palier intermédiaire de refroidissement.

Enfin, on bobine la tôle obtenue à une température comprise entre 470 et 625°C. Cette température est importante puisqu'une température de bobinage supérieure à 625 °C conduira à un rapport d'expansion de trou Ac% inférieur à 50%.

Dans le cas de la fabrication d'une tôle non revêtue, la température de bobinage sera comprise entre 470 et 625°C afin que la précipitation soit la plus dense et la plus durcissante possible.

Dans le cas de la fabrication d'une tôle destinée à être soumise à une opération de galvanisation, la température de bobinage sera comprise entre 515 et 560 °C et ce, afin de compenser la précipitation complémentaire intervenant lors du traitement de réchauffage associé à l'opération de galvanisation.

Dans ce dernier cas, la tôle bobinée sera ensuite décapée puis réchauffée à une température comprise entre 600 et 750 °C. La tôle sera alors refroidie à une vitesse comprise entre 5 et 20°C/s, puis revêtue de zinc dans un bain de zinc adapté.

Sur le Tableau 3 ci-dessous, on a fait varier la température de réchauffage de brame, et/ou la température de bobinage pour trois tôles de compositions chimiques différentes, l'une contenant 0,215% de Si (composition A), la deuxième 0,490%Si (composition B) et la troisième 0,21 %Si (composition C).

Toutes les tôles d'acier selon l'invention ont été laminées avec un taux de réduction-de 0,15 dans l'avant-dernière passe de laminage, et un taux de réduction de 0,07 dans la dernière passe de laminage, la déformation cumulée lors de ces deux passes étant de 0,22. A l'issue du laminage à chaud, on obtient donc une austénite peu déformée.

Dans le cas de l'acier des compositions A et B, lorsque la température de bobinage est trop élevée (650°C, essais A1 et B3), le rapport d'expansion Ac de trou est nettement inférieur à 50%.

Dans le cas de l'acier de composition B, lorsque la température de réchauffage de brame est seulement de 1150°C (essai B2), la résistance mécanique visée de 780 MPa n'est pas atteinte.

Ainsi, dans le cas où la composition ne comporte pas de chrome (Tableau 3), la température de bobinage est comprise entre 470°C et strictement 620°C. La température de 620 °C est exclue conformément à l'essai B4 du Tableau 3. On préférera une température de bobinage comprise entre 525°C et strictement 620°C.

Dans le cas où la composition comporte du chrome, la température de bobinage est préférentiellement comprise entre 470°C et 580°C conformément aux Tableaux 2A,2B et 2C.

D'autres essais ont été également réalisés sur un acier contenant 0,245% de Si et une faible quantité de Cr à 0,0299% dont la composition figure sur le tableau 4 ci-dessous. On a déterminé la limite d'élasticité Re, la résistance Rm, et l'allongement à rupture A. Ces essais ont été réalisés à partir d'une brame réchauffée à 1240°C, laminée à chaud jusqu'à une température de fin de laminage de 900°C, refroidie directement à 70°C/s, puis bobinée à une température comprise entre 440 et 540°C et refroidie jusqu'à température ambiante. La tôle est ensuite réchauffée jusqu'à une température comprise entre 580 et 720°C avant d'être galvanisée en continu dans un bain de Zn.

Pour l'essai C1, la température de bobinage trop faible ne permet pas une précipitation et un durcissement suffisant, la résistance n'atteint pas 780MPa. Il en est de même pour l'essai C2, où l'on a augmenté la température de réchauffage avant galvanisation, sans que l'on arrive à atteindre la résistance voulue.

Pour l'essai C3, le durcissement a été excessif et la limite d'élasticité dépasse le niveau recherché de 840MPa.

**TABLEAU 3**

| | | N°d'essai | Température de réchauffage de brame (°C) | Température de fin de laminage (°C) | Température de bobinage (°C) | Limite d'élasticité Re (Mpa) | Résistance maximale en traction Rm (MPa) | Allongement total à rupture (%) | Expansion de trou Ac(Méthode ISO) (%) |
|---|---|---|---|---|---|---|---|---|---|
| | Composition B | B1 | 1250 | 900 | 500 | 768 | 784 | 16,4 | 93 |
| Effet T réchauffage | Composition B | B2 | **1150** | 900 | 500 | **672** | **703** | 18,1 | 112 |
| Effet T bobinage | Composition A | A1 | 1240 | 900 | **650** | 824 | 833 | 15,3 | **34** |
| | Composition A | A2 | 1240 | 900 | 560 | 836,5 | 847 | 14,5 | 50 |
| | Composition C | C1 | 1250 | 900 | 500 | 742 | **774** | 14,8 | 94 |
| | Composition B | B3 | 1240 | 900 | **650** | 821,5 | 833,5 | 15,1 | **47** |
| | Composition B | B4 | 1240 | 900 | **620** | **877** | 887,5 | 14,4 | **46** |
| | Composition B | B5 | 1250 | 900 | 500 | 768 | 784 | 16,4 | 93 |
| | | | | | | | | | |
| | C | Mn | Si | Al | Nb | Ti | N | S | P |
| Composition A | 0,049 | 1,64 | 0,215 | 0,032 | 0,041 | 0,112 | 0,004 | 0,003 | 0,018 |
| Composition B | 0,049 | 1,63 | 0,49 | 0,032 | 0,04 | 0,11 | 0,004 | 0,002 | 0,018 |
| Composition C | 0,051 | 1,66 | 0,21 | 0,006 | 0,04 | 0,115 | 0,002 | 0,002 | 0,015 |

**TABLEAU 4**

| N° essai | Température de bobinage (°C) | Température de réchaufffage avant galvanisation (°C) | Limite d'élasticité Re (MPa) | Résistance mécanique Rm (MPa) | A (%) |
|---|---|---|---|---|---|
| C1 | **440** | **580** | 695 | **765** | 12,4 |
| C2 | **440** | 630 | 708 | **774** | **8,5** |
| C3 | **500** | 720 | **842** | 888 | 12,4 |
| C4 | 540 | 660 | 771 | 824 | 14 |

| C | Si | Mn | P | S | Cr | Ni | Al | Cu | Nb | Ti | N |
|---|---|---|---|---|---|---|---|---|---|---|---|
| 0,0528 | 0,245 | 1,791 | 0,0114 | 0,0015 | 0,0299 | 0,0248 | 0,0359 | 0,0295 | 0,0286 | 0,0995 | 0,007 |

**Revendications**

1. Tôle d'acier laminé à chaud de limite d'élasticité supérieure à 690 MPa et inférieure ou égale à 840 MPa, de résistance comprise entre 780 MPa et 950 MPa, d'allongement à rupture supérieur à 10% et de rapport d'expansion de trou (Ac) supérieur ou égal à 50%, dont la composition chimique comprend, les teneurs étant exprimées en poids :

   $0,040\% \leq C \leq 0,065\%$
   $1,4\% \leq Mn \leq 1,9\%$
   $0,1\% \leq Si \leq 0,55\%$
   $0,095\% \leq Ti \leq 0,145\%$
   $0,025\% \leq Nb \leq 0,045\%$
   $0,005\% \leq Al \leq 0,1\%$
   $0,002\% \leq N \leq 0,007\%$
   $S \leq 0,004\%$
   $P < 0,020\%$
   optionnellement
   $Cr \leq 0,7\%$
   $Cu \leq 0,1\%$
   $Ni \leq 0,25\%$
   $B \leq 0,003\%$
   $Ca \leq 0,005\%$
   $Mg \leq 0,005\%$

   le reste étant constitué de fer et d'impuretés inévitables provenant de l'élaboration, dont la microstructure est constituée de bainite granulaire, de ferrite, de cémentite en pourcentage surfacique inférieur à 1,5%, et de carbonitrures de titane et de niobium, dont la densité de nitrures de titane de taille moyenne supérieure à 6 micromètres est inférieure ou égale à 3/mm², et
   le rapport entre la taille de grain $D_L$ mesurée parallèlement à la direction de laminage et la taille de grain $D_N$ mesurée perpendiculairement à la direction de laminage est inférieur ou égal à 1,4.

2. Tôle d'acier selon la revendication 1, **caractérisée en ce que** le rapport entre la taille de grain $D_L$ mesurée parallèlement à la direction de laminage et la taille de grain $D_N$ mesurée perpendiculairement à la direction de laminage est inférieur ou égal à 1,3.

3. Tôle d'acier selon l'une quelconque des revendications 1 et 2, **caractérisée en ce que** la composition chimique comprend, les teneurs étant exprimées en poids :

   $0,045\% \leq C \leq 0,065\%$
   $1,6\% \leq Mn \leq 1,9\%$
   $0,1\% \leq Si \leq 0,55\%$
   $0,095\% \leq Ti \leq 0,125\%$

$0,025\% \leq Nb \leq 0,045\%$
$0,01\% \leq Al \leq 0,1\%$
$0,002\% \leq N \leq 0,007\%$
$S \leq 0,004\%$
$P<0,020\%$
optionnellement
$Cu \leq 0,1\%$
$Ni \leq 0,25\%$
$B \leq 0,003\%$
$Ca \leq 0,005\%$
$Mg \leq 0,005\%$

la dite composition ne comportant pas de chrome.

4. Tôle d'acier selon l'une quelconque des revendications précédentes, **caractérisée en ce que** la composition de l'acier comprend, les teneurs étant exprimées en poids:

$0,1\% \leq Si \leq 0,3\%$

5. Tôle d'acier selon la revendication 1, **caractérisée en ce que** la composition chimique comprend, les teneurs étant exprimées en poids :

$0,040\% \leq C \leq 0,065\%$
$1,4\% \leq Mn \leq 1,9\%$
$0,1\% \leq Si \leq 0,4\%$
$0,095\% \leq Ti \leq 0,145\%$
$0,025\% \leq Nb \leq 0,045\%$
$0,01\% \leq Al \leq 0,1\%$
$0,002\% \leq N \leq 0,007\%$
$0,2\% \leq Cr \leq 0,7\%$
$S \leq 0,004\%$
$P<0,020\%$

optionnellement
$Cu \leq 0,1\%$
$Ni \leq 0,25\%$
$B \leq 0,003\%$
$Ca \leq 0,005\%$
$Mg \leq 0,005\%$

6. Tôle d'acier selon l'une quelconque des revendications 1, 2 ou 5, **caractérisée en ce que** la composition de l'acier comprend, les teneurs étant exprimées en poids:

$0,4\% \leq Cr \leq 0,6\%$

7. Tôle d'acier selon l'une quelconque des revendications précédentes, **caractérisée en ce que** le pourcentage surfacique de la bainite granulaire est compris entre 80% et 95% et **en ce que** le pourcentage surfacique de la ferrite est inférieur à 20%.

8. Tôle d'acier selon l'une quelconque des revendications précédentes, **caractérisée en ce que** la composition de l'acier comprend en teneur en poids :

$0,0005\% \leq Ca \leq 0,005\%$

9. Tôle d'acier selon l'une quelconque des revendications précédentes, **caractérisée en ce que** la composition de l'acier comprend en teneur en poids:

$0,0005\% \leq Mg \leq 0,005\%$

**10.** Procédé de fabrication d'une tôle d'acier laminée à chaud de limite d'élasticité supérieure à 690 MPa et inférieure ou égale à 840 MPa, de résistance comprise entre 780 MPa et 950 MPa et d'allongement à rupture supérieur à 10%, **caractérisé en ce qu'**on approvisionne sous forme de métal liquide un acier dont la composition comprend, les teneurs étant exprimées en poids :

$0,040\% \leq C \leq 0,065\%$
$1,4\% \leq Mn \leq 1,9\%$
$0,1\% \leq Si \leq 0,55\%$
$0,095\% \leq Ti \leq 0,145\%$
$0,025\% \leq Nb \leq 0,045\%$
$0,005\% \leq Al \leq 0,1\%$
$0,002\% \leq N \leq 0,007\%$
$S \leq 0,004\%$
$P < 0,020\%$
optionnellement
$Cr \leq 0,7\%$
$Cu \leq 0,1\%$
$Ni \leq 0,25\%$
$B \leq 0,003\%$
$Mg \leq 0,005\%$

le reste étant constitué de fer et d'impuretés inévitables,
**en ce qu'**on effectue un traitement sous vide ou au SiCa, dans ce dernier cas,
la composition comprend en outre, les teneurs étant exprimées en poids $0,0005\% \leq Ca \leq 0,005\%$,
**en ce que** les quantités de titane [Ti] et d'azote [N] dissoutes dans le métal liquide satisfont à %[Ti] %[N] < $6.10^{-4}$ $\%^2$, **en ce qu'**on coule l'acier pour obtenir un demi-produit coulé,
**en ce qu'**on réchauffe éventuellement le dit demi-produit à une température comprise entre 1160°C et 1300°C, puis
**en ce qu'**on lamine à chaud ledit demi-produit coulé avec une température de fin de laminage comprise entre 880°C et 930 °C, le taux de réduction de l'avant-dernière passe étant inférieur à 0,25, le taux de la dernière passe étant inférieur à 0,15, la somme des deux taux de réduction étant inférieure à 0,37, la température de début de laminage de l'avant dernière passe étant inférieure à 960 °C, de façon à obtenir un produit laminé à chaud, puis
**en ce qu'**on refroidit le dit produit laminé à chaud à une vitesse comprise entre 50 et 150 °C/s de façon à obtenir une tôle d'acier laminé à chaud,
et **en ce qu'**on bobine la dite tôle à une température comprise entre 470 et 625 °C.

**11.** Procédé selon la revendication 10, **caractérisé en ce que** la composition de l'acier comprend, les teneurs étant exprimées en poids :

$0,045\% \leq C \leq 0,065\%$
$1,6\% \leq Mn \leq 1,9\%$
$0,1\% \leq Si \leq 0,3\%$
$0,095\% \leq Ti \leq 0,125\%$
$0,025\% \leq Nb \leq 0,045\%$
$0,01\% \leq Al \leq 0,1\%$
$0,002\% \leq N \leq 0,007\%$
$S \leq 0,004\%$
$P < 0,020\%$
optionnellement
$Cu \leq 0,1\%$
$Ni \leq 0,25\%$
$B \leq 0,003\%$
$Mg \leq 0,005\%$

la dite composition ne comportant pas de chrome

**12.** Procédé selon la revendication 11, **caractérisé en ce qu'**on bobine la tôle à une température comprise entre 515 et strictement 620 °C.

**13.** Procédé de fabrication d'une tôle laminée à chaud selon l'une quelconque des revendications 10 à 12, **caractérisé en ce qu'**on bobine la tôle à une température comprise entre 515 et 560 °C,
en ce qu'on décape la dite tôle, puis
en ce qu'on réchauffe la tôle décapée à une température comprise entre 600 et 750 °C, puis **en ce qu'**on refroidit la tôle décapée réchauffée à une vitesse comprise entre 5 et 20°C/s,
et **en ce qu'**on revêt de zinc la tôle obtenue dans un bain de zinc adapté.

**14.** Procédé selon la revendication 10, **caractérisé en ce que** la composition de l'acier comprend, les teneurs étant exprimées en poids :

$0,040\% \leq C \leq 0,065\%$
$1,4\% \leq Mn \leq 1,9\%$
$0,1\% \leq Si \leq 0,4\%$
$0,095\% \leq Ti \leq 0,145\%$
$0,025\% \leq Nb \leq 0,045\%$
$0,005\% \leq Al \leq 0,1\%$
$0,002\% \leq N \leq 0,007\%$
$0,2\% \leq Cr \leq 0,7\%$
$S \leq 0,004\%$
$P < 0,020\%$

optionnellement
$Cu \leq 0,1\%$
$Ni \leq 0,25\%$
$B \leq 0,003\%$
$Ca \leq 0,005\%$
$Mg \leq 0,005\%$

et **en ce qu'**on bobine la dite tôle à une température comprise entre 470 et 580 °C

**15.** Procédé selon la revendication 10, **caractérisé en ce que** la composition de l'acier comprend, les teneurs étant exprimées en poids:

$0,4\% \leq Cr \leq 0,6\%$

**16.** Procédé selon l'une quelconque des revendications 14 et 15, **caractérisé en ce que** lorsque la somme des teneurs en Mn, Si et Cr est inférieure à 2,35%, on bobine la tôle à une température comprise entre 520°C et 580 °C.

**Patentansprüche**

**1.** Warmgewalztes Stahlblech mit einer Elastizitätsgrenze von größer als 690 MPa und kleiner oder gleich 840 MPa, mit einer Festigkeit, die zwischen 780 MPa und 950 MPa liegt, einer Bruchdehnung von größer als 10% und einem Lochaufweitungsverhältnis (Ac) von größer oder gleich 50%, dessen chemische Zusammensetzung folgendes aufweist, wobei der Gehalt jeweils in Gewichtsprozent ausgedrückt ist:

$0,040\% \leq C \leq 0,065\%$
$1,4\% \leq Mn \leq 1,9\%$
$0,1\% \leq Si \leq 0,55\%$
$0,095\% \leq Ti \leq 0,145\%$
$0,025\% \leq Nb \leq 0,045\%$
$0,005\% \leq Al \leq 0,1\%$
$0,002\% \leq N \leq 0,007\%$
$S \leq 0,004\%$
$P < 0,020\%$
optional
$Cr \leq 0,7\%$
$Cu \leq 0,1\%$

Ni ≤ 0,25%
B ≤ 0,003%
Ca ≤ 0,005%
Mg ≤ 0,005%

wobei der Rest aus Eisen und unvermeidbaren Verunreinigungen gebildet ist, die aus der Bearbeitung resultieren, wobei die Mikrostruktur davon aus gekörntem Bainit, Ferrit, Zementit mit einem Flächenanteil von kleiner als 1,5 % und Titan- und Niobcarbonitriden gebildet ist, wobei die Dichte von Titannitriden davon mit einer mittleren Größe von größer als 6 Mikrometern kleiner oder gleich $3/mm^2$ ist, und

das Verhältnis zwischen der Korngröße $D_L$, gemessen parallel zu der Walzrichtung, und der Korngröße $D_N$, gemessen senkrecht zu der Walzrichtung, kleiner oder gleich 1,4 ist.

2. Stahlblech gemäß Anspruch 1, **dadurch gekennzeichnet, dass** das Verhältnis zwischen der Korngröße $D_L$, gemessen parallel zu der Walzrichtung, und der Korngröße $D_N$, gemessen senkrecht zu der Walzrichtung, kleiner oder gleich 1,3 ist.

3. Stahlblech gemäß irgendeinem der Ansprüche 1 und 2, **dadurch gekennzeichnet, dass** die chemische Zusammensetzung folgendes aufweist, wobei der Gehalt jeweils in Gewichtsprozent ausgedrückt ist:

0,045% ≤ C ≤ 0,065%
1,6% ≤ Mn ≤ 1,9%
0,1% ≤ Si ≤ 0,55%
0,095% ≤ Ti ≤ 0,125%
0,025% ≤ Nb ≤ 0,045%
0,01% ≤ Al ≤ 0,1%
0,002% ≤ N ≤ 0,007%
S ≤ 0,004%
P < 0,020%
optional
Cu ≤ 0,1%
Ni ≤ 0,25%
B ≤ 0,003%
Ca ≤ 0,005%
Mg ≤ 0,005%,

wobei die Zusammensetzung kein Chrom aufweist.

4. Stahlblech gemäß irgendeinem der vorhergehenden Ansprüche, **dadurch gekennzeichnet, dass** die Zusammensetzung des Stahls folgendes aufweist, wobei der Gehalt in Gewichtsprozent ausgedrückt ist:

0,1% ≤ Si ≤ 0,3%.

5. Stahlblech gemäß Anspruch 1, **dadurch gekennzeichnet, dass** die chemische Zusammensetzung folgendes aufweist, wobei der Gehalt jeweils in Gewichtsprozent ausgedrückt ist:

0,040% ≤ C ≤ 0,065%
1,4% ≤ Mn ≤ 1,9%
0,1% ≤ Si ≤ 0,4%
0,095% ≤ Ti ≤ 0,145%
0,025% ≤ Nb ≤ 0,045%
0,01% ≤ Al ≤ 0,1%
0,002% ≤ N ≤ 0,007%
0,2% ≤ Cr ≤ 0,7 %
S ≤ 0,004%
P < 0,020%

optional
Cu ≤ 0,1%

Ni ≤ 0,25%
B ≤ 0,003%
Ca ≤ 0,005%
Mg ≤ 0,005%.

6. Stahlblech gemäß irgendeinem der Ansprüche 1, 2 oder 5, **dadurch gekennzeichnet, dass** die Zusammensetzung des Stahls folgendes aufweist, wobei der Gehalt in Gewichtsprozent ausgedrückt ist:

0,4% ≤ Cr ≤ 0,6%

7. Stahlblech gemäß irgendeinem der vorhergehenden Ansprüche, **dadurch gekennzeichnet, dass** der Flächenanteil des körnigen Bainits zwischen 80% und 95% liegt, und dass der Flächenanteil in Prozent des Ferrits kleiner als 20% ist.

8. Stahlblech gemäß irgendeinem der vorhergehenden Ansprüche, **dadurch gekennzeichnet, dass** die Zusammensetzung des Stahls in Gehalt in Gewichtsprozent folgendes aufweist:

0,0005% ≤ Ca ≤ 0,005%

9. Stahlblech gemäß irgendeinem der vorhergehenden Ansprüche, **dadurch gekennzeichnet, dass** die Zusammensetzung des Stahls in Gehalt in Gewichtsprozent folgendes aufweist:

0,0005% ≤ Mg ≤ 0,005%

10. Verfahren zum Herstellen eines warmgewalzten Stahlblechs mit einer Elastizitätsgrenze von größer als 690 MPa und kleiner oder gleich 840 MPa, mit einer Festigkeit, die zwischen 780 MPa und 950 MPa liegt, und einer Bruchdehnung von größer als 10%, **dadurch gekennzeichnet, dass** ein Stahl in Form von flüssigem Metall bereitgestellt wird, dessen Zusammensetzung folgendes aufweist, wobei der Gehalt jeweils in Gewichtsprozent ausgedrückt ist:

0,040% ≤ C ≤ 0,065%
1,4% ≤ Mn ≤ 1,9%
0,1% ≤ Si ≤ 0,55%
0,095% ≤ Ti ≤ 0,145%
0,025% ≤ Nb ≤ 0,045%
0,005% ≤ Al ≤ 0,1%
0,002% ≤ N ≤ 0,007%
S ≤ 0,004%
P < 0,020%
optional
Cr ≤ 0,7%
Cu ≤ 0,1%
Ni ≤ 0,25%
B ≤ 0,003%
Mg ≤ 0,005%

wobei der Rest aus Eisen und unvermeidbaren Verunreinigungen gebildet ist,
dass eine Vakuumbehandlung oder eine SiCa-Behandlung durchgeführt wird, wobei in letzterem Fall die Zusammensetzung ferner folgendes aufweist, wobei der Gehalt in Gewichtsprozent ausgedrückt ist:

0,0005% ≤ Ca ≤ 0,005%,

dass die Mengen an Titan [Ti] und Stickstoff [N], die in dem Flüssigmetall gelöst sind, $\%[Ti]\,\%[N] < 6.10^{-4}\,\%^2$ erfüllen,
dass der Stahl gegossen wird, um ein gegossenes Halbprodukt zu erhalten,
dass eventuell das Halbprodukt auf eine Temperatur von zwischen 1160°C und 1300°C erhitzt wird, anschließend
dass das gegossene Halbprodukt mit einer Temperatur am Ende des Walzens von zwischen 880°C und 930°C warmgewalzt wird, wobei das Reduktionsverhältnis des vorletzten Durchgangs kleiner als 0,25 ist, wobei das Verhältnis des letzten Durchgangs kleiner als 0,15 ist, wobei die Summe der beiden Reduktionsverhältnisse kleiner als 0,37 ist, wobei die Walzanfangstemperatur des vorletzten Durchgangs kleiner als 960°C ist, so dass ein warmgewalztes Produkt erhalten wird, anschließend
dass das warmgewalzte Produkt mit einer Geschwindigkeit von zwischen 50 und 150°C/s abgekühlt wird, um ein warmgewalztes Stahlblech zu erhalten,
und dass das Blech bei einer Temperatur von zwischen 470 und 625°C aufgewickelt wird.

11. Verfahren gemäß Anspruch 10, **dadurch gekennzeichnet, dass** die Zusammensetzung des Stahls folgendes aufweist, wobei der Gehalt jeweils in Gewichtsprozent ausgedrückt ist:

$0,045\% \leq C \leq 0,065\%$
$1,6\% \leq Mn \leq 1,9\%$
$0,1\% \leq Si \leq 0,3\%$
$0,095\% \leq Ti \leq 0,125\%$
$0,025\% \leq Nb \leq 0,045\%$
$0,01\% \leq Al \leq 0,1\%$
$0,002\% \leq N \leq 0,007\%$
$S \leq 0,004\%$
$P < 0,020\%$
optional
$Cu \leq 0,1\%$
$Ni \leq 0,25\%$
$B \leq 0,003\%$
$Mg \leq 0,005\%,$

wobei die Zusammensetzung kein Chrom aufweist.

12. Verfahren gemäß Anspruch 11, **dadurch gekennzeichnet, dass** das Blech bei einer Temperatur von zwischen 515 und streng 620°C aufgewickelt wird.

13. Verfahren zum Herstellen eines warmgewalzten Blechs gemäß irgendeinem der Ansprüche 10 bis 12, **dadurch gekennzeichnet, dass** das Blech bei einer Temperatur von zwischen 515 und 560°C aufgewickelt wird,
dass das Blech dekapiert wird, anschließend
dass das dekapierte Blech auf eine Temperatur von zwischen 600 und 750°C erhitzt wird, dass anschließend das dekapierte erhitzte Blech mit einer Geschwindigkeit von zwischen 5 und 20°C/s abgekühlt wird,
und dass das erhaltene Blech in einem angepassten Zinkbad mit Zink beschichtet wird.

14. Verfahren gemäß Anspruch 10, **dadurch gekennzeichnet, dass** die Zusammensetzung des Stahls folgendes aufweist, wobei der Gehalt jeweils in Gewichtsprozent ausgedrückt ist:

$0,040\% \leq C \leq 0,065\%$
$1,4\% \leq Mn \leq 1,9\%$
$0,1\% \leq Si \leq 0,4\%$
$0,095\% \leq Ti \leq 0,145\%$
$0,025\% \leq Nb \leq 0,045\%$
$0,005\% \leq Al \leq 0,1\%$
$0,002\% \leq N \leq 0,007\%$
$0,2\,\% \leq Cr \leq 0,7\,\%$
$S \leq 0,004\%$
$P < 0,020\%$

optional
$Cu \leq 0,1\%$
$Ni \leq 0,25\%$
$B \leq 0,003\%$
$Ca \leq 0,005\,\%$
$Mg \leq 0,005\%$

und dass das Blech bei einer Temperatur von zwischen 470 und 580°C aufgewickelt wird.

**15.** Verfahren gemäß Anspruch 10, **dadurch gekennzeichnet, dass** die Zusammensetzung des Stahls folgendes aufweist, wobei der Gehalt in Gewichtsprozent ausgedrückt ist:

$0,4\% \le Cr \le 0,6\%$

**16.** Verfahren gemäß irgendeinem der Ansprüche 14 und 15, **dadurch gekennzeichnet, dass**, wenn die Summe des Gehalts an Mn, Si und Cr kleiner als 2,35% ist, das Blech bei einer Temperatur von zwischen 520°C und 580°C aufgewickelt wird.

**Claims**

**1.** Hot rolled steel sheet having yield strength of more than 690 MPa and less than or equal to 840 MPa, strength between 780 MPa and 950 MPa, elongation at break greater than 10% and hole expansion ratio (HER) greater than or equal to 50%, the chemical composition of which comprises, the amounts being expressed by weight:

$0.040\% \le C \le 0.065\%$
$1.4\% \le Mn \le 1.9\%$
$0.1\% \le Si \le 0.55\%$
$0.095\% \le Ti \le 0.145\%$
$0.025\% \le Nb \le 0.045\%$
$0.005\% \le Al \le 0.1\%$
$0.002\% \le N \le 0.007\%$
$S \le 0.004\%$
$P < 0.020\%$
optionally
$Cr \le 0.7\%$
$Cu \le 0.1\%$
$Ni \le 0.25\%$
$B \le 0.003\%$
$Ca \le 0.005\%$
$Mg \le 0.005\%$

the remainder being composed of iron and inevitable impurities due to production, whereof the microstructure is composed of granular bainite, ferrite, and cementite in surface percentage of less than 1.5%, and titanium and niobium carbonitrides, whereof the density of titanium nitrides of average size greater than 6 micrometers is less than or equal to 3/mm$^2$, and
the ratio between the grain size $D_L$ measured parallel to the direction of rolling and the grain size $D_N$ measured perpendicular to the direction of rolling is less than or equal to 1.4.

**2.** Sheet steel according to claim 1 **characterised in that** the ratio between the grain size $D_L$ measured parallel to the direction of rolling and the grain size $D_N$ measured perpendicular to the direction of rolling is less than or equal to 1.3.

**3.** Sheet steel according to either one of claims 1 and 2, **characterised in that** the chemical composition comprises, the contents being expressed by weight:

$0.045\% \le C \le 0.065\%$
$1.6\% \le Mn \le 1.9\%$
$0.1\% \le Si \le 0.55\%$
$0.095\% \le Ti \le 0.125\%$
$0.025\% \le Nb \le 0.045\%$
$0.01\% \le Al \le 0.1\%$
$0.002\% \le N \le 0.007\%$
$S \le 0.004\%$
$P < 0.020\%$
optionally
$Cu \le 0.1\%$
$Ni \le 0.25\%$

B≤0.003%
Ca ≤ 0.005%
Mg ≤ 0.005%

said composition not comprising chrome.

4. Sheet steel according to any one of the preceding claims, **characterised in that** the composition of the steel comprises, the contents being expressed by weight:

    0.1% ≤ Si ≤ 0.3%

5. Sheet steel according to claim 1, **characterised in that** the chemical composition comprises, the contents being expressed by weight:

    0.040% ≤ C ≤ 0.065%
    1.4% ≤ Mn ≤ 1.9%
    0.1 % ≤ Si ≤ 0.4%
    0.095% ≤ Ti≤ 0.145%
    0.025% ≤ Nb ≤ 0.045%
    0.01% ≤ Al ≤ 0.1%
    0.002% ≤ N ≤ 0.007%
    0.2% ≤ Cr ≤ 0.7%
    S ≤ 0.004%
    P<0.020%

    optionally
    Cu ≤ 0.1%
    Ni ≤ 0.25%
    B≤0.003%
    Ca ≤ 0.005%
    Mg ≤ 0.005%

6. Sheet steel according to any one of claims 1, 2 or 5, **characterised in that** the composition of the steel comprises, the contents being expressed by weight:

    0.4% ≤ Cr ≤ 0.6%

7. Sheet steel according to any one of the preceding claims, **characterised in that** the surface percentage of the granular bainite is between 80% and 95% and **in that** the surface percentage of the ferrite is less than 20%.

8. Sheet steel according to any one of the preceding claims, **characterised in that** the composition of the steel comprises, in content by weight:

    0.0005% ≤ Ca ≤ 0.005%

9. Sheet steel according to any one of the preceding claims, **characterised in that** the composition of the steel comprises, in content by weight:

    0.0005% ≤ Mg ≤ 0.005%

10. Method of manufacturing hot rolled steel sheet having yield strength of more than 690 MPa and less than or equal to 840 MPa, strength between 780 MPa and 950 MPa and elongation at break greater than 10%, **characterized in that** a steel is provided in liquid metal form, the chemical composition of which comprises, the contents being expressed by weight:

    0.040% ≤ C ≤ 0.065%
    1.4% ≤ Mn ≤ 1.9%
    0.1 % ≤ Si ≤ 0.55%

0.095% ≤ Ti ≤ 0.145%
0.025% ≤ Nb ≤ 0.045%
0.005% ≤ Al ≤ 0.1%
0.002% ≤ N ≤ 0.007%
S ≤ 0.004%
P<0.020%
Optionally
Cr≤ 0.7%
Cu≤ 0.1%
Ni≤ 0.25%
B≤0.003%
Mg ≤ 0.005%

the rest being composed of iron and inevitable impurities,
**in that** a vacuum or SiCa treatment is provided, in the latter case the composition further comprising 0.0005% ≤ Ca ≤ 0.005%, the content being expressed by weight,
**in that** the quantities of titanium [Ti] and nitrogen [N] dissolved in the liquid metal satisfy %[Ti] %[N] < 6.10$^{-4}$ %$^2$, **in that** the steel is cast to obtain a cast semi-finished product,
**in that** said semi-finished product may be heated to a temperature between 1,160°C and 1,300°C, then
**in that** said cast semi-finished product is hot-rolled with an end-of-rolling temperature between 880°C and 930°C, the rate of reduction of the penultimate pass being less than 0.25, the rate of the last past being less than 0.15, the sum of the two rates of reduction being less than 0.37, the start-of-rolling temperature of the penultimate pass being less than 960°C, so as to obtain a hot-rolled product, then in that said hot -rolled product is cooled at a rate between 50 and 150°C/s so as to obtain a hot-rolled sheet steel,
and **in that** said sheet is coiled at a temperature of between 470°C and 625°C.

11. Method according to claim 10, **characterised in that** the composition of the steel comprises, the contents being expressed by weight:

0.045% ≤ C ≤ 0.065%
1.6% ≤ Mn ≤ 1.9%
0.1 % ≤ Si ≤ 0.3%
0.095% ≤ Ti ≤ 0.125%
0.025% ≤ Nb ≤ 0.045%
0.01% ≤ Al ≤ 0.1%
0.002% ≤ N ≤ 0.007%
S ≤ 0.004%
P<0.020%
optionally
Cu≤ 0.1%
Ni≤ 0.25%
B≤0.003%
Mg ≤ 0.005%

said composition not comprising chrome.

12. Method according to claim 11, **characterised in that** the sheet is coiled at a temperature of between 515°C and strictly 620°C.

13. Method of manufacturing a hot-rolled sheet according to any one of claims 10 to 12, **characterised in that** the sheet is coiled at a temperature of between 515°C and 560°C,
**in that** said sheet is pickled, then
**in that** the pickled sheet is heated to a temperature of between 600°C and 750°C, then the heated pickled sheet is cooled at a rate of between 5 and 20°C/s,
and **in that** the sheet thus obtained is coated with zinc in a suitable zinc bath

14. Method according to claim 10, **characterised in that** the composition of the steel comprises, the contents being expressed by weight:

0.040% ≤ C ≤ 0.065%
1.4% ≤ Mn ≤ 1.9%
0.1 % ≤ Si ≤ 0.4%
0.095% ≤ Ti ≤ 0.145%
0.025% ≤ Nb ≤ 0.045%
0.005% ≤ Al ≤ 0.1%
0.002% ≤ N ≤ 0.007%
0.2% ≤ Cr ≤ 0.7%
S ≤ 0.004%
P<0.020%

optionally
Cu≤ 0.1%
Ni≤ 0.25%
B≤0.003%
Ca ≤ 0.005%
Mg ≤ 0.005%

and **in that** said sheet is coiled at a temperature of between 470°C and 580°C.

15. Method according to claim 10, **characterised in that** the composition of the steel comprises, the contents being expressed by weight:

0.4% ≤ Cr ≤ 0.6%

16. Method according to either one of claims 14 and 15, **characterised in that** when the sum of the contents of Mn, Si and Cr is less than 2.35%, the sheet is coiled at a temperature of between 520°C and 580°C.

**Figure 1**

**EP 2 689 045 B1**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 2020451 A

**Littérature non-brevet citée dans la description**

- Characterisation and Quantification of Complex Bainitic Microstructures in High and Ultra-High Strength Steels. *Materials Science Forum,* Novembre 2005, vol. 500 (501), 387-394